# EUROPÄISCHE PATENTANMELDUNG

(11) **EP 2 848 440 A1**
(43) Veröffentlichungstag der Anmeldung: **18.03.2015**
(21) Anmeldenummer: 13184834.3
(22) Anmeldetag: 17.09.2013
(51) Int. Cl.: B60J 5/06

(54) **Nutzfahrzeug mit einem Planenaufbau**

(71) Anmelder: Schmitz Cargobull AG, 48341 Altenberge (DE)
(72) Erfinder: Rathmann, Norbert, 48356 Nordwalde (DE)
(74) Vertreter: Cohausz & Florack

(57) **Zusammenfassung**

Die Erfindung betrifft ein Nutzfahrzeug, mit einem Boden (16), an dem eine Ladefläche (2) gebildet ist, und mit einem einen Laderaum umgrenzenden Planenaufbau (3) mit zwei in Bezug auf die Ladefläche (2) senkrecht ausgerichteten und einer Seite (L1,L2) der Ladefläche (2) zugeordneten Rungen (4,5,7,8) und einer Plane (S1,S2), die aus einer geschlossenen Stellung in eine geöffnete Stellung verschiebbar ist, in der sie eine Ladeöffnung (Ö) freigibt, wobei die Plane (S1,S2) Verstärkungen aufweist, um eine vom Laderaum her gegen sie drückende Last aufhalten zu können. Um bei einem solchen Nutzfahrzeug bei einfacher Handhabung eine ausreichende Sicherung gegen ein seitliches Ausbrechen von Transportgut zu sichern, sieht die Erfindung vor, dass eine lattenartig ausgebildete Bordwand (18,19), die mittels einer Halterung schwenkbar an dem Boden (16) gelagert ist und sich aus einer Gebrauchsstellung, in der sich die lattenartige Bordwand (18,19) zwischen zwei benachbarten Rungen (4,7,5) des Planenaufbaus (3) erstreckt und beabstandet zu der Ladefläche (2) oberhalb von dieser angeordnet ist, in eine Öffnungsstellung schwenken lässt, in der sie die Ladeöffnung (Ö) des Planenaufbaus (3) freigibt.

## Beschreibung

Die Erfindung betrifft ein Nutzfahrzeug, das einen Boden, an dessen freier Oberseite eine Ladefläche gebildet ist, und einen Planenaufbau umfasst, der im geschlossenen Zustand einen über dem Boden gebildeten Laderaum umgrenzt. Der Planenaufbau hat dabei mindestens zwei in Bezug auf die Ladefläche senkrecht ausgerichtete und einer Seite der Ladefläche zugeordnete Rungen sowie eine Plane, die aus einer geschlossenen Stellung, in der sie die jeweilige Seite des Planenaufbaus verschließt, in eine geöffnete Stellung verschiebbar ist, in der sie an der jeweiligen Seite des Planenaufbaus eine Ladeöffnung freigibt. Damit die Plane bei geschlossenem Planenaufbau eine vom Laderaum her gegen sie drückende Last aufhalten kann, ist die Plane gleichzeitig mit Verstärkungen versehen.

Bei Nutzfahrzeugen dieser Art handelt es sich typischerweise um einen Lastkraftwagen, einen Anhänger oder einen Sattelauflieger für einen Sattelzug, der aus einer Zugmaschine und dem jeweiligen von der Zugmaschine gezogenen Sattelauflieger zusammengesetzt ist.

Der Planenaufbau solcher Nutzfahrzeuge ist in der Regel quaderförmig ausgebildet und umgrenzt einen entsprechend quaderförmigen Laderaum, der an seiner Unterseite durch die dann ein langgestrecktes Rechteck bildende Ladefläche abgegrenzt ist. Der Planenaufbau weist dabei in der Regel ein Grundgerüst auf, das aus sich längs der jeweiligen Längsseite erstreckenden, das Dach des Aufbaus tragenden Dachholmen, so genannten "Eckrungen", die fest an den Eckbereichen der Ladefläche montiert sind und von denen jeweils zwei den ihnen zugeordneten Dachholm tragen, sowie einer Stirn- und einer Rückwand gebildet, die in der Regel aus festen Panelen gebildet sind. Mindestens einer der Dachholme wird in der Regel als Führung für die längs der jeweiligen Längsseite des Planenaufbaus aus der geschlossenen in die geöffnete Stellung verschiebbaren Seitenplane genutzt.

In der Fachsprache werden Nutzfahrzeuge, die mit einem derartigen Planenaufbau versehen sind, auch als "Curtain-Sider" bezeichnet. Bei diesen Fahrzeugen ist eine einfache Beladung der Ladefläche des Fahrzeugs dadurch ermöglicht, dass mindestens die die Längsseiten des Planenaufbaus bildenden Planen aus einer geschlossenen Stellung, in der sie den Laderaum gegenüber der äußeren Umgebung abschirmen, in Richtung der in normaler Fahrtrichtung vorderen Stirnseite des Fahrzeugs verschoben werden können, um den Planenaufbau an der betreffenden Seite nahezu vollständig frei zugänglich zu machen. Beispiele für Nutzfahrzeuge mit Planenaufbauten dieser Art sind in der DE 20 2006 003 548 U1 und der DE 20 2008 012 966 U1 beschrieben und in der Praxis in großer Zahl im Einsatz.

Da die zum Be- und Entladen zur Verfügung stehenden Zeiten in der Regel kurz bemessen sind, besteht, wie bereits in der DE 20 2006 003 548 U1 angesprochen, der Wunsch, einerseits das Öffnen der jeweiligen Seitenplane möglichst zu vereinfachen und anderseits möglichst wenige zusätzlichen Montagearbeiten vornehmen zu müssen, um die jeweilige Ladeöffnung für die Beladung frei zu machen.

Diesem Wunsch steht das Problem entgegen, dass im Fahrbetrieb von Nutzfahrzeugen mit Planenaufbauten, beispielsweise bei Kurvenfahrt, erhebliche dynamische Kräfte auftreten können, die quer zur Fahrtrichtung ausgerichtet sind. In Fällen, in denen das im Laderaum abgestellte Transportgut nicht ordnungsgemäß befestigt ist, wird das Transportgut in Folge dieser Querkräfte gegen die parallel zur Fahrtrichtung ausgerichteten Längsseitenflächen des Planenaufbaus gedrängt. Der Planenaufbau muss daher so ausgerüstet sein, dass er im Notfall auch solche Belastungen sicher aufnehmen kann und verhindert, dass das Transportgut seitlich aus dem Planenaufbau ausbricht.

Um dies zu gewährleisten, sind bei konventionellen Planenaufbauten zwischen den den Dachholm tragenden, den Eckbereichen der Ladefläche zugeordneten Rungen üblicherweise weitere Rungen vorgesehen, die einerseits als zusätzliche Stütze für den Dachholm dienen und andererseits Aufnahmen für so genannte Einstecklatten bereitstellen, von denen in der Regel mehrere über die Höhe des Planenaufbaus verteilt in dem jeweils zwischen zwei Rungen begrenzten Raum angeordnet werden. Um die Ladeöffnung vollständig freizugeben, müssen bei derartigen Planenaufbauten nach dem Aufschieben der jeweiligen Seitenplane zunächst die Einstecklatten entfernt werden. Bei einigen Ausführungen von Planenaufbauten können dann die zwischen den Eckrungen vorgesehenen Rungen geführt an dem jeweils zugeordneten

Dachholm in Richtung der Stirn- oder Rückwand des Aufbaus verschoben werden, so dass eine maximal große Ladeöffnung zur Verfügung steht. Trotz des einfachen Aufbaus und der in der Regel einfachen Montierbarkeit und Demontierbarkeit nehmen die zum Öffnen und Schließen von derartigen Planenaufbauten erforderlichen Arbeiten Zeit in Anspruch und stellen eine große körperliche Belastung dar.

Um diesen Aufwand zu vermeiden, ist versucht worden, die Seitenplane so zu ertüchtigen, dass zumindest auf die Einstecklatten verzichtet werden kann. So ist beispielsweise in der WO 2010/130001 A1 eine Plane vorgeschlagen, die ein aus Fasern gebildetes Grundgewebe aufweist, das in üblicher Weise mit PVC beschichtet ist. In das Grundgewebe sind so genannte Hochleistungsfasern, zu denen Aramid-Fasern und desgleichen zählen, eingearbeitet, die sich auch unter höchster Last nur unwesentlich dehnen. Diese Hochleistungsfasern sind dabei so ausgerichtet, dass sich die Plane bei geschlossenem Planenaufbau und normal zu der von ihr gebildeten Seitenfläche gerichteter drückender Belastung nur wenig dehnt und, dementsprechend zumindest von ihrer grundsätzlichen Belastbarkeit her, ein seitliches Ausbrechen des Transportguts über die jeweilige Längsseite der Ladefläche hinaus verhindern kann.

Praktische Versuche haben allerdings gezeigt, dass das Gesamtsystem "Planenaufbau" auch bei Verwendung derartig verstärkter Planen in quer zur Fahrtrichtung gerichteter Richtung eine zu geringe Steifigkeit aufweist, wenn auf eine zusätzliche Sicherung der Längsseiten des Planenaufbaus in dem zwischen dessen benachbarten Rungen jeweils begrenzten Raum vollständig verzichtet wird.

Vor dem Hintergrund des voranstehend erläuterten Standes der Technik bestand die Aufgabe, ein Nutzfahrzeug mit Planenaufbau zu schaffen, bei dem zum einen eine ausreichende Sicherung gegen ein seitliches Ausbrechen von Transportgut auch unter hohen Belastungen gesichert ist und bei dem zum anderen der Aufwand für das Öffnen und Schließen der Ladeöffnung des Planenaufbaus minimiert ist.

Zur Lösung dieser Aufgabe schlägt die Erfindung ein Nutzfahrzeug mit den in Anspruch 1 angegebenen Merkmalen vor.

Vorteilhafte Ausgestaltungen der Erfindung sind in den abhängigen Ansprüchen genannt und werden nachfolgend wie der allgemeine Erfindungsgedanke im Einzelnen erläutert.

Ein erfindungsgemäßes Nutzfahrzeug weist somit in Übereinstimmung mit dem eingangs erläuterten Stand der Technik einen üblicherweise vom Chassis des Nutzfahrzeugs getragenen Boden auf, an dessen freier Oberseite eine Ladefläche gebildet ist. Zusätzlich hat ein erfindungsgemäßes Nutzfahrzeug einen im geschlossenen Zustand einen über dem Boden gebildeten Laderaum umgrenzenden Planenaufbau, der mindestens zwei in Bezug auf die Ladefläche senkrecht ausgerichtete und einer Seite der Ladefläche zugeordnete Rungen sowie eine Plane umfasst, die aus einer geschlossenen Stellung, in der sie die jeweilige Seite des Planenaufbaus verschließt, in eine geöffnete Stellung verschiebbar ist, in der sie an der jeweiligen Seite des Planenaufbaus eine Ladeöffnung freigibt, wobei die Plane Verstärkungen aufweist, um bei geschlossenem Planenaufbau eine vom Laderaum her gegen sie drückende Last aufhalten zu können.

Erfindungsgemäß ist nun bei einem solchen Nutzfahrzeug eine lattenartig ausgebildete Bordwand vorgesehen, die mittels einer Halterung schwenkbar an dem Boden gelagert und aus einer Gebrauchsstellung, in der sich die lattenartige Bordwand zwischen zwei benachbarten Rungen des Planenaufbaus erstreckt und beabstandet zu der Ladefläche oberhalb von dieser angeordnet ist, in eine Öffnungsstellung schwenken lässt, in der sie die Ladeöffnung des Planenaufbaus freigibt.

Der Erfindung liegt die Erkenntnis zu Grunde, dass bei Seitenplanenaufbauten, bei denen neben der verstärkten Plane keine zusätzliche Sicherung durch Einstecklatten oder desgleichen vorhanden ist, der untere bodennahe Bereich einer besonderen Absicherung bedarf. Durch die zu diesem Zweck vorgesehene lattenartige Bordwand wird sicher verhindert, dass beispielsweise auf Paletten gestapeltes Transportgut oder andere schwere Güter, die direkt auf der Ladefläche des Nutzfahrzeugs abgestellt sind, bei einem seitlichen Verrutschen gegen den unteren, üblicherweise seitlich am Boden des Nutzfahrzeug anliegenden Randbereich der jeweiligen Seitenplane stoßen und somit die Plane in einem Bereich belasten, über den bei geschlossenem Planenaufbau die Plane üblicherweise auch am Boden oder Chassis des Nutzfahrzeugs verspannt ist. Durch die erfindungsgemäß vorgesehene Bordwand wird die den Planenaufbau an der jeweiligen Seite verschließende Plane somit in dem Bereich gegen einen Aufprall geschützt, der für ihre Funktion von entscheidender Bedeutung ist. In Fällen, in denen das Transportgut so lose im Laderaum gelagert ist, dass es trotz des durch die lattenartige Bordwand gebildeten Gegenhalts gegen die seitliche Plane drückt, geschieht dies in einem oberhalb der Bordwand vorhandenen Bereich, in dem die Plane diese Belastung aufgrund ihrer Verstärkung und ihrer unbeeinträchtigten, durch die Bordwand geschützten Verspannung sicher aufnehmen kann.

Wesentlich für den Erfolg der Erfindung ist auch, dass die erfindungsgemäß vorgesehene Bordwand "lattenartig" ausgebildet ist, d.h. eine im Vergleich zu ihrer Länge geringe Höhe und Dicke besitzt. Eine erfindungsgemäß vorgesehene Bordwand gleicht insoweit einer Einstecklatte, wie sie beim konventionellen Planenaufbau verwendet wird. Jedoch ist die lattenartige Ladebordwand erfindungsgemäß über eine geeignete Halterung schwenkbar an dem Boden gelagert. Auf diese Weise kann sie durch einfache Handgriffe aus ihrer Gebrauchsstellung in eine Öffnungsstellung geschwenkt werden, in der sie sich außerhalb der Ladeöffnung befindet. Zur einfachen Handhabbarkeit trägt dabei bei, dass die Bordwand in Gebrauchsstellung mit Abstand zur Ladefläche angeordnet ist. Durch diese Anordnung kann die Bordwand bei minimierten Abmessungen und dementsprechend minimalem Gewicht hohe Belastungen aufnehmen und bietet gleichzeitig einen guten Griff.

Ein weiterer Vorteil der Erfindung besteht darin, dass bei einem erfindungsgemäßen Aufbau zum Sichern des Transportguts gegen seitliches Verrutschen keine losen Teile benötigt werden, die umständlich montiert werden müssen und aufgrund ihres Gewichts und ihrer Gestaltung die Gefahr von Verletzungen oder Verlust mit sich bringen würden.

Eine kostengünstige und gleichzeitig hinsichtlich des Gewichts optimierte Variante der Erfindung ist dadurch gekennzeichnet, dass die lattenartige Bordwand als Metallprofil ausgebildet ist. So kann die Bordwand beispielsweise durch Umformen eines Stahlblechs oder desgleichen geformt sein. Ebenso ist denkbar, die lattenartige Bordwand aus einem Aluminiumstrangprofil zu formen.

Ein sicherer Halt der lattenartigen Bordwand in der Gebrauchsstellung kann dadurch erreicht werden, dass die lattenartige Bordwand mit den ihr zugeordneten, zueinander benachbarten Rungen verriegelbar ist. Zu diesem Zweck kann die lattenartige Bordwand an ihren seitlichen Enden jeweils eine Verriegelungseinrichtung aufweisen, die sich aus einer Verriegelungsstellung, bei der sie bei in Gebrauchsstellung verschwenkter lattenartiger Bordwand mit einem an der jeweils zugeordneten Runge ausgebildeten Anschlag zusammenwirkt, in eine Lösestellung bewegen lässt, in der die lattenartige Bordwand frei in ihre Öffnungsstellung schwenkbar ist.

Die Halterung, über die die lattenförmige Bordwand an dem Boden schwenkbar gehalten ist, kann beispielsweise mindestens einen Arm, der mit seinem einen Endabschnitt fest mit der lattenartigen Bordwand verbunden ist, und mindestens ein am Boden befestigtes Lager umfassen, an dem der Arm um eine Schwenkachse schwenkbar gelagert ist, um die herum sich die lattenartige Bordwand aus der Gebrauchsin die Öffnungsstellung schwenken lässt.

Die schwenkbare Befestigung der lattenförmigen Bordwand an dem Boden kann dadurch vereinfacht werden, dass, wie bei konventionellen Nutzfahrzeugen üblich, der Boden ein der jeweiligen Seite des Planenaufbaus zugeordnetes Seitenprofil umfasst. In diesem Fall kann das Lager für den Arm der Halterung problemlos an dem betreffenden Seitenprofil ausgebildet bzw. dort befestigt werden.

Selbstverständlich kann auch bei einem erfindungsgemäßen Nutzfahrzeug der Planenaufbau zwei einen Dachholm tragende Rungen aufweisen, von denen jeweils eine in einem der jeweiligen Seite des Planenaufbaus zugeordneten Eckbereiche der Ladefläche angeordnet ist. Ebenso kann bei einem erfindungsgemäßen Nutzfahrzeugaufbau mindestens eine weitere Runge vorgesehen sein, die zum Freigeben der Ladeöffnung an dem Dachholm geführt längs der jeweiligen Seite des Planenaufbaus verschiebbar und zum Gebrauch in einer Gebrauchsposition an dem Boden arretierbar ist. Erfindungsgemäß ist dann jedem bei in Gebrauchsstellung befindlichen Rungen zwischen zwei benachbarten Rungen begrenzten Raum eine erfindungsgemäß verschwenkbare lattenartige Bordwand zugeordnet.

Eine optimale Wirkung bei gleichzeitig einfacher Handhabung ergibt sich, wenn bei in Gebrauchsstellung befindlicher lattenartiger Bordwand der Abstand zwischen der Ladefläche und der der Ladefläche zugeordneten Unterkante der lattenartigen Bordwand 60 - 180 mm, insbesondere 80 - 150 mm, beträgt und die Höhe der lattenartigen Bordwand 120 - 350 mm, insbesondere 150 - 300 mm beträgt. Bei derart bemessenen Abmessungen lassen sich einerseits im randseitigen Bereich des Bodens vorhandene Anschlagpunkte oder desgleichen für eine Verzurrung des Transportguts oder zum Anbringen von anderen Sicherungselementen auch bei in Gebrauchsstellung befindlicher lattenartiger Bordwand problemlos erreichen. Andererseits stützt die derart bemessene Bordwand das auf dem Boden abgestellte Transportgut auch dann noch sicher, wenn es auf einer Palette gestapelt ist. Hier fängt die erfindungsgemäß ausgebildete Bordwand die Palette ab, ohne das Transportgut selbst zu berühren, wenn es in Folge von dynamischen Querkräften zum Verrutschen von Palette und Transportgut kommt.

Die Länge der erfindungsgemäß vorgesehenen lattenartigen Bordwände entspricht typischerweise dem Acht- bis Dreißigfachen ihrer Höhe und liegt in der Praxis typischerweise bei 2500 - 4000 mm. Gleichzeitig entspricht die Dicke der lattenartigen Bordwände typischerweise einem Fünfundzwanzigstel bis einem Achtel ihrer Höhe und liegt in der Praxis typischerweise im Bereich von 15 - 35 mm.

Die bei einem erfindungsgemäßen Planenaufbau zum Abdecken der jeweiligen Seitenfläche vorgesehene Plane kann in jeder geeigneten Weise so mit Verstärkungen ausgerüstet sein, dass sie die im Einsatz auf sie wirkenden Kräfte auch dann aufnehmen kann, wenn sich Transportgut im Innern des Laderaums löst und unter Wirkung von Fliehkräften oder anders ausgelösten Querkräften gegen die Plane drückt. Eine Möglichkeit, eine Plane in entsprechender Weise zu ertüchtigen, besteht darin, dass die Plane des Planenaufbaus aus einem faserverstärkten PVC-Material besteht. Die Verstärkungsfasern können dabei als separate Streifen auf das PVC-Grundmaterial aufgetragen oder in das PVC-Material eingebettet sein. Eine besonders belastbare Plane ergibt sich dabei dann, wenn es sich bei den zur Verstärkung der Plane eingesetzten Fasern um Hochleistungsfasern, beispielsweise Aramidfasern oder desgleichen, handelt.

Um ihren Gebrauchswert weiter zu erhöhen, kann eine erfindungsgemäß lattenartige Bordwand Öffnungen aufweisen, in die ein Befestigungselement einsteckbar ist, das zum Halten eines auf der Ladefläche abgestellten Transportguts vorgesehen ist. Bei dem Befestigungselement kann es sich beispielsweise um einen Steckbalken handeln, der sich über die Breite der Ladefläche erstreckt und so den Laderaum in an sich bekannter Weise in mehrere Abschnitte einteilt, in denen jeweils Ladegut untergebracht wird.

Mit der Erfindung kann durch Auswahl einer geeignet festen, beispielsweise nach Art der WO 2010/130001 A1 ausgebildeten Plane in Kombination mit der erfindungsgemäß vorgesehenen lattenartigen Bordwand ein Planenaufbau für ein Nutzfahrzeug zur Verfügung gestellt werden, bei dem bei geschlossenem Planenaufbau der von zwei benachbarten Rungen seitlich begrenzte und oberhalb der diesen benachbarten Rungen zugeordneten lattenartigen Bordwand bis zum Dachholm vorhandene Raum frei von Bauteilen des Planenaufbaus ist. Bei einem solcherart ausgebildeten Nutzfahrzeug-Aufbau ist bei optimierter Betriebssicherheit der mit dem Öffnen und Schließen der jeweiligen Ladeöffnung verbundene Aufwand nur noch minimal.

Nachfolgend wird die Erfindung anhand einer ein Ausführungsbeispiel darstellenden Zeichnung näher erläutert. Es zeigen jeweils schematisch:

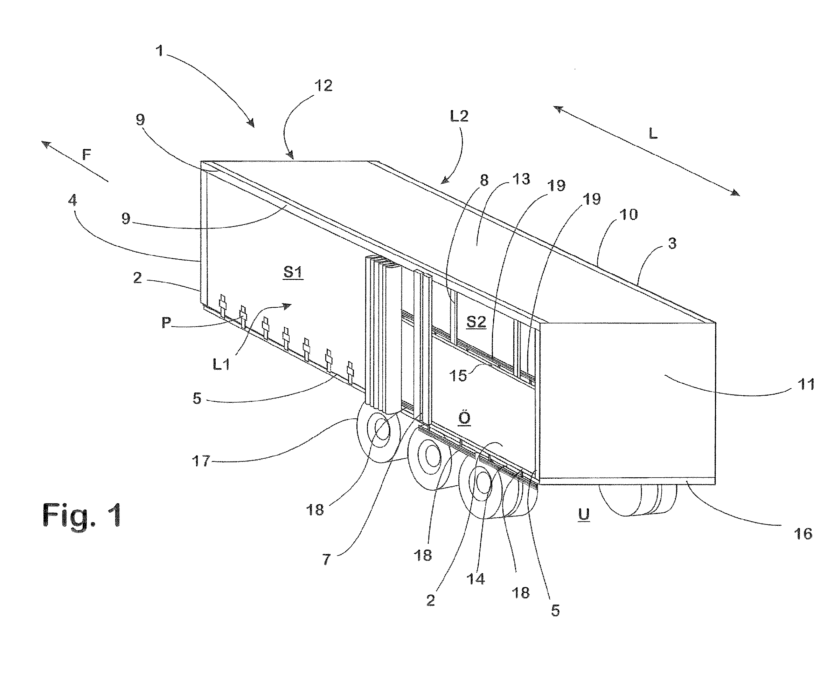

- Fig. 1: einen Sattelauflieger für einen Sattelzug in einer perspektivischen Ansicht von hinten;

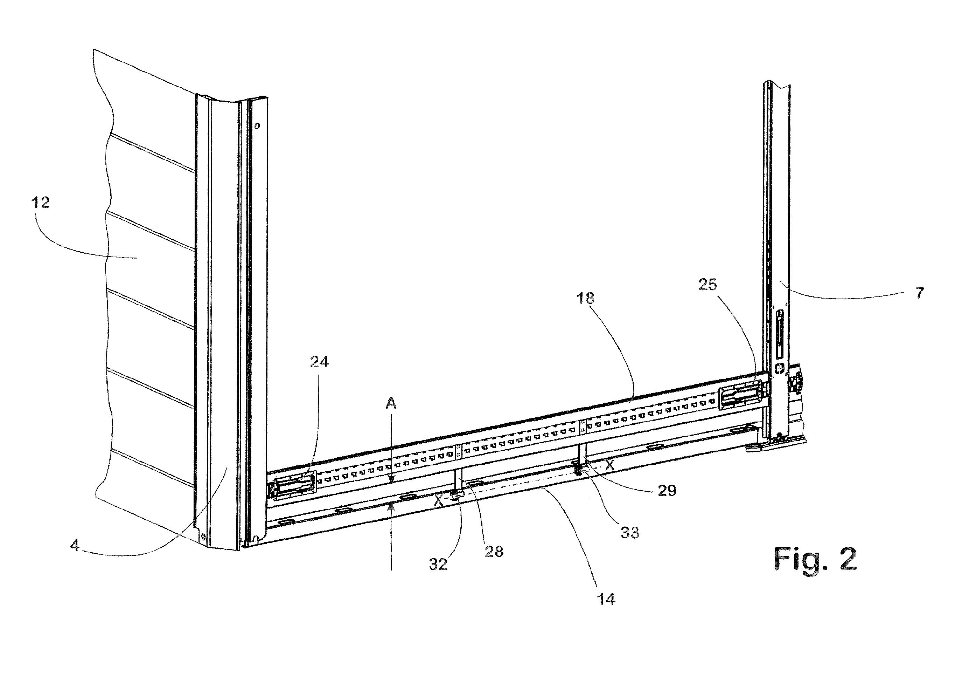

- Fig. 2: den vorderen unteren Eckbereich des Sattelaufliegers bei vollständig entfernter Seitenplane in einem Ausschnitt in perspektivischer Ansicht von vorne;

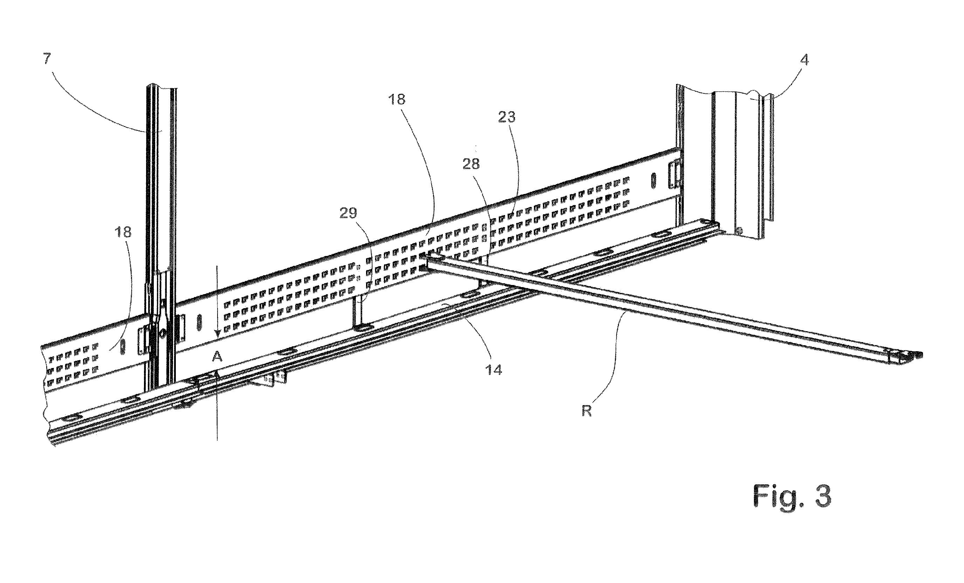

- Fig. 3: einen Ausschnitt eines Planenaufbaus des Sattelaufliegers in perspektivischer Ansicht vom Laderaum des Sattelaufliegers her gesehen, wobei hier zur Verdeutlichung die die Ladefläche tragenden Platten des Bodens weggelassen sind;

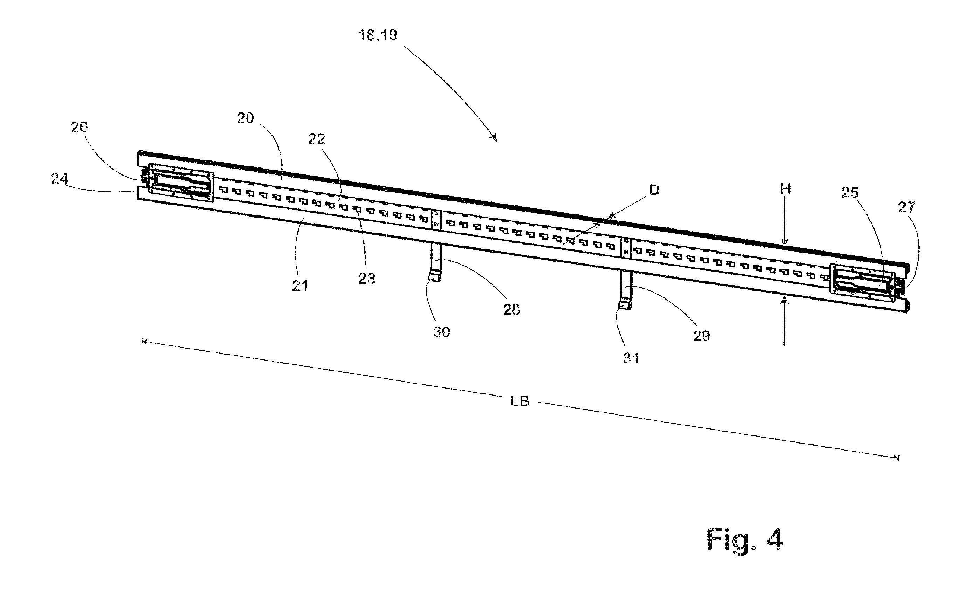

- Fig. 4: eine lattenartige Ladebordwand in einer perspektivischen Ansicht;
- Fig. 5: einen vergrößerten Ausschnitt von Fig. 2 in perspektivischer Ansicht.

Der Sattelauflieger 1 bildet in Kombination mit einer nicht gezeigten Zugmaschine einen Sattelzug.

Auf der Ladefläche 2 des Sattelaufliegers 1 ist ein Planenaufbau 3 vorgesehen, der aus an den vier Ecken einer in Draufsicht ein langgestrecktes Rechteck bildenden Ladefläche 2 angeordneten Eckrungen 4,5, beispielsweise jeweils fünf zwischen den Eckrungen 4,5 entlang der Längsseiten L1,L2 der Ladefläche 2 verteilt angeordnete Schieberungen 7,8 und Dachholme 9,10 umfasst.

Von den Dachholmen 9,10 ist jeweils einer der Längsseiten L1,L2 der Ladefläche 2 zugeordnet und durch die ihm jeweils zugeordneten Schieberungen 7,8 und Eckrungen 4,5 getragen. Zwischen den Dachholmen 9,10 und dem oberen Rand einer am in Fahrtrichtung F hinteren Ende angeordneten festen Rückwand 11 sowie dem oberen Rand einer in Fahrtrichtung F vorderen Stirnwand 12 ist eine Dachplane 13 in an bekannter Weise gespannt.

Die Schieberungen 7,8 sind in an sich ebenfalls bekannter Weise beispielsweise in den Dachholmen 9,10 verschiebbar geführt und können am jeweils zugeordneten Längsseitenprofil 14,15 eines die Ladefläche 2 an seiner Oberseite tragenden Bodens 16 lösbar fixiert werden. Der Boden 16 wird dabei vom Chassis 17 des Sattelaufliegers 1 getragen.

Ebenso ist an den Dachholmen 9,10 jeweils eine aus einem PVC-Material hergestellte und mit einem Hochleistungsfasern enthaltenden Fasergewebe verstärkte Seitenplane S1,S2 derart verschiebbar geführt, dass sie aus einer geschlossenen Stellung, in der sie die jeweilige Längsseite des Planenaufbaus 3 vollständig abdeckt, in eine Öffnungsstellung geschoben werden kann, in der sie zu einem Paket aufgefaltet ist und die Ladeöffnung Ö des Planenaufbaus 3 an der jeweiligen Längsseite L1,L2 freigibt. Bei geschlossener Seitenplane S1,S2 werden die Seitenplanen S1,S2 in an sich ebenso bekannter Weise gegen mittels geeigneter Spanneinrichtungen P am jeweiligen Längsseitenprofil 14,15 des Bodens verspannt.

Der prinzipielle Aufbau eines solchen Sattelaufliegers 1 ist beispielsweise in der DE 20 2008 012 966 U1 beschrieben, deren Inhalt zur Erläuterung in die vorliegende Anmeldung einbezogen wird.

Bei geschlossenem Planenaufbau 3 sind die Schieberungen 7,8 in gleichen Abständen entlang der jeweilige Längsseite der Ladefläche 2 verteilt positioniert. Jedem der dann zwischen zwei benachbarten Eckrungen begrenzten, sich von der Ladefläche 2 bis zur Unterseite des jeweiligen Dachholms 9,10 erstreckenden Räume ist jeweils eine lattenartige Bordwand 18,19 zugeordnet.

Die lattenartigen Bordwände 18,19 sind jeweils als aus einem 3 mm dicken Stahlblech geformte Blechprofile ausgebildet, die einen kastenartigen, sich über die Länge der Bordwände 18,19 erstreckenden Gurtabschnitt 20,21 und einen dazwischen liegenden, die Gurtabschnitte 20,21 verbindenden Stegabschnitt 22 aufweisen. In den Stegabschnitt sind in drei zueinander beabstandet und parallel zu den Gurtabschnitten 20,21 verlaufenden Reihen in gleichmäßigen Abständen schlüssellochartige Öffnungen 23 eingeformt. In die Öffnungen 23 kann ein passend geformter endseitiger Vorsprung eines Sperrbalkens R gesteckt werden, der sich zur Sicherung eines auf der Ladefläche 2 abzustellenden, hier nicht gezeigten Transportguts dient.

An ihren Endabschnitten ist in die Bordwände 18,19 jeweils eine Riegeleinrichtung 24,25 eingelassen. Die Riegel 26,27 der Riegeleinrichtungen 24,25 stehen in Längsrichtung L der Bordwände 18,19 ausgerichtet seitlich von den Bordwänden 18,19 ab. Die Länge LB der Bordwände 18,19 ist mit 3200 mm wesentlich größer als ihre Höhe H, die hier beispielsweise 190 mm beträgt, und ihre Dicke D, die hier beispielsweise 25 mm beträgt.

Mit Abstand zum jeweiligen Endabschnitt sind an den Bordwänden 18,19 zwei Arme 28,29 mit ihrem der jeweiligen Bordwand 18,19 zugeordneten Endabschnitt befestigt. Die Arme 28,29 stehen dabei rechtwinklig von den Bordwänden 18,19 ab und sind an ihren freien Enden zu Ösen 30,31 gebogen.

In die Ösen 30,31 greifen Zapfen von Lagerungen 32,33, die seitlich an dem jeweils zugeordneten Längsseitenprofil 14,15 des Bodens 16 befestigt sind. Die Zapfen der Lagerungen definieren dabei eine parallel zum jeweiligen Dachholm 9,10 ausgerichtete Schwenkachse S.

Die Arme 28,29 bilden auf diese Weise gemeinsam mit den Lagerungen 32,33 Halterungen, über die die jeweilige lattenartige Bordwand 18,19 um die Schwenkachse X schwenkbar an dem Boden 16 gehalten ist. Die Bordwände 18,19 können auf diese Weise aus einer Gebrauchsstellung, in der sie sich zwischen den jeweils zugeordneten, zueinander benachbarten Rungen (Eckrungen 4,5, Schieberungen 7,8) befinden, in eine Öffnungsstellung geschwenkt werden, in der sie in Richtung des Untergrunds U, auf dem der Sattelauflieger 1 steht, nach unten hängend an den Lagerung 32,33 gehalten sind. Die Länge der Arme 28,29 ist dabei so bemessen, dass die jeweilige Bordwand 18,19 in ihrer Gebrauchsstellung mit ihrer der Ladefläche 3 zugeordneten Unterkante in einem Abstand A zur Ladefläche 3 angeordnet sind. In der Gebrauchsstellung rasten die Riegel 26,27 der Riegeleinrichtungen 24,25 in ihnen jeweils zugeordneten Ausnehmungen ein, die in die jeweils zugeordneten Rungen 4,5,7,8 eingeformt sind.

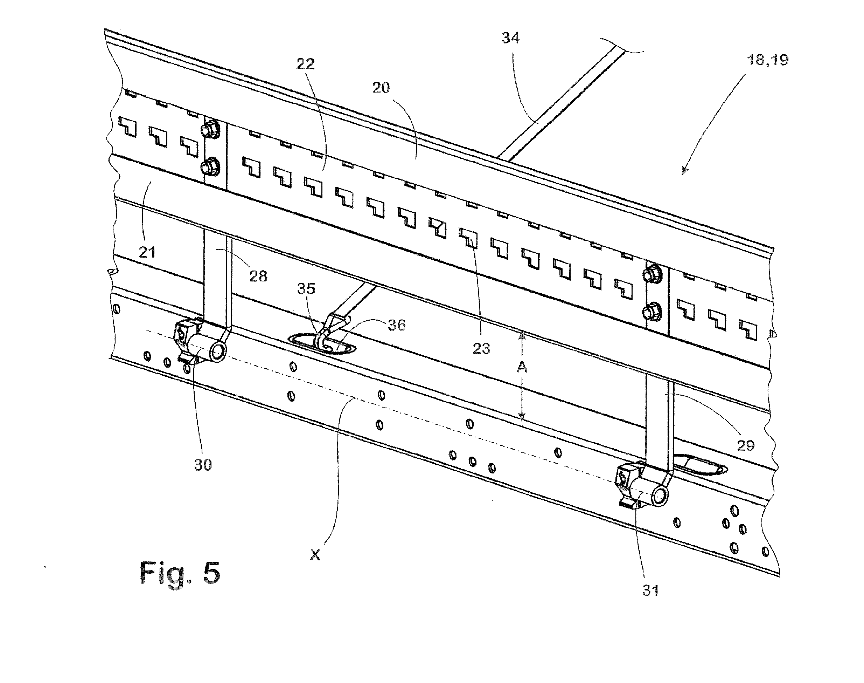

Der Abstand A zwischen den lattenförmigen Bordwänden 18,19 und dem jeweils zugeordneten Längsseitenprofil 14,15 ist so bemessen, dass ein zum Verzurren der jeweils zu transportierenden Ladung vorgesehenes Zurrmittel 34, bei dem es sich typischerweise um ein Seil, ein Band oder einen Gurt handelt, mit einem an seinem einen Ende befestigten Haken 35 in eine als Anschlagpunkt dienende Öffnung 36 eingehakt werden kann, die in die der Ladefläche 2 zugeordneten Oberseite des jeweiligen Längsseitenprofils 14,15 eingeformt ist (Fig. 5).

### BEZUGSZEICHEN

- 1: Sattelauflieger
- 2: Ladefläche
- 3: Planenaufbau
- 4,5: Eckrungen
- 7,8: Schieberungen
- 9,10: Dachholme
- 11: Rückwand
- 12: Stirnwand
- 13: Dachplane
- 14,15: Längsseitenprofil des Bodens 16
- 16: Boden
- 17: Chassis des Sattelaufliegers 1
- 18,19: lattenartige Bordwände
- 20,21: Gurtabschnitte der Bordwände 18,19
- 22: Stegabschnitt der Bordwände 18,19
- 23: Öffnungen der Bordwände 18,19
- 24,25: Riegeleinrichtung der Bordwände 18,19
- 26,27: Riegel der Riegeleinrichtung 24,25
- 28,29: Arme
- 30,31: Ösen
- 32,33: Lagerungen34 Zurrmittel
- 35: Haken
- 36: Öffnung des jeweiligen Längsseitenprofils 14,15

- A: Abstand
- D: Dicke der Bordwände 18,19
- F: Fahrtrichtung
- H: Höhe der Bordwände 18,19
- L1,L2: Längsseiten
- LB: Länge der Bordwände 18,19
- P: Spanneinrichtungen
- R: Sperrbalken
- Ö: Ladeöffnung
- U: Untergrund
- S1,S2: Seitenplanen
- X: Schwenkachse

## Patentansprüche

1. Nutzfahrzeug, mit einem Boden (16), an dessen freier Oberseite eine Ladefläche (2) gebildet ist, und mit einem im geschlossenen Zustand einen über dem Boden (16) gebildeten Laderaum umgrenzenden Planenaufbau (3), der mindestens zwei in Bezug auf die Ladefläche (2) senkrecht ausgerichtete und einer Seite (L1,L2) der Ladefläche (2) zugeordnete Rungen (4,5,7,8) sowie eine Plane (S1,S2) umfasst, die aus einer geschlossenen Stellung, in der sie die jeweilige Seite (L1,L2) des Planenaufbaus (3) verschließt, in eine geöffnete Stellung verschiebbar ist, in der sie an der jeweiligen Seite des Planenaufbaus (3) eine Ladeöffnung (Ö) freigibt, wobei die Plane (S1,S2) Verstärkungen aufweist, um bei geschlossenem Planenaufbau (3) eine vom Laderaum her gegen sie drückende Last aufhalten zu können, **gekennzeichnet durch** eine lattenartig ausgebildete Bordwand (18,19), die mittels einer Halterung schwenkbar an dem Boden (16) gelagert ist und sich aus einer Gebrauchsstellung, in der sich die lattenartige Bordwand (18,19) zwischen zwei benachbarten Rungen (4,7,5) des Planenaufbaus (3) erstreckt und beabstandet zu der Ladefläche (2) oberhalb von dieser angeordnet ist, in eine Öffnungsstellung schwenken lässt, in der sie die Ladeöffnung (Ö) des Planenaufbaus (3) freigibt.

2. Nutzfahrzeug nach Anspruch 1, **dadurch gekennzeichnet, dass** die lattenartige Bordwand (18,19) als Metallprofil ausgebildet ist.

3. Nutzfahrzeug nach einem der voranstehenden Ansprüche, **dadurch gekennzeichnet, dass** die lattenartige Bordwand (18,19) mit den ihr zugeordneten, zueinander benachbarten Rungen (4,7,5) verriegelbar ist.

4. Nutzfahrzeug nach Anspruch 3, **dadurch gekennzeichnet, dass** die lattenartige Bordwand (18,19) an ihren seitlichen Enden jeweils eine Verriegelungseinrichtung (24,25) aufweist, die sich aus einer Verriegelungsstellung, bei der sie bei in Gebrauchsstellung verschwenkter lattenartiger Bordwand (18,19) mit einem an der jeweils zugeordneten Runge (4,5,7,8) ausgebildeten Anschlag zusammenwirkt, in eine Lösestellung bewegen lässt, in der die lattenartige Bordwand (18,19) frei in ihre Öffnungsstellung schwenkbar ist.

5. Nutzfahrzeug nach einem der voranstehenden Ansprüche, **dadurch gekennzeichnet, dass** die die lattenartige Bordwand (18,19) tragende Halterung mindestens einen Arm (28,29), der mit seinem einen Endabschnitt fest mit der lattenartigen Bordwand (18,19) verbunden ist, und mindestens ein am Boden (16) befestigtes Lager (32,33) umfasst, an dem der Arm (28,29) um eine Schwenkachse (X) schwenkbar gelagert ist, um die herum sich die lattenartige Bordwand (18,19) aus der Gebrauchs- in die Öffnungsstellung schwenken lässt.

6. Nutzfahrzeug nach einem der voranstehenden Ansprüche, **dadurch gekennzeichnet, dass** der Boden (16) ein der jeweiligen Seite des Planenaufbaus (3) zugeordnetes Seitenprofil (14,15) umfasst.

7. Nutzfahrzeug nach Anspruch 5 und 6, **dadurch gekennzeichnet, dass** das Lager (32,33) der Halterung für den Arm (28,29) der Halterung an dem Seitenprofil (14,15) vorgesehen ist.

8. Nutzfahrzeug nach einem der voranstehenden Ansprüche, **dadurch gekennzeichnet, dass** der Planenaufbau (3) mindestens einen Dachholm (9,10), der einer der Seiten des Planenaufbaus (3) zugeordnet ist, und zwei den Dachholm (9,10) tragende Rungen (4,5) aufweist, von denen jeweils eine in einem der jeweiligen Seite (L1,L2) des Planenaufbaus (3) zugeordneten Eckbereiche der Ladefläche (2) angeordnet ist und **dass** mindestens eine weitere Runge (7,8) vorgesehen ist, die zum Freigeben der Ladeöffnung (Ö) an dem Dachholm (9,10) geführt längs der jeweiligen Seite (L1,L2) des Planenaufbaus (3) verschiebbar und in einer Gebrauchsposition an dem Boden (16) arretierbar ist.

9. Nutzfahrzeug nach einem der voranstehenden Ansprüche, **dadurch gekennzeichnet, dass** bei in Gebrauchsstellung befindlicher lattenartiger Bordwand (18,19) der Abstand (A) zwischen der Ladefläche (2) und der der Ladefläche (2) zugeordneten Unterkante der lattenartigen Bordwand (18,19) 80 - 150 mm beträgt.

10. Nutzfahrzeug nach einem der voranstehenden Ansprüche, **dadurch gekennzeichnet, dass** die Plane (S1,S2) des Planenaufbaus (3) aus einem faserverstärkten PVC-Material besteht.

11. Nutzfahrzeug nach Anspruch 10, **dadurch gekennzeichnet, dass** die Fasern in das PVC-Material der Plane (S1,S2) eingebettet sind.

12. Nutzfahrzeug nach einem der Ansprüche 10 oder 11, **dadurch gekennzeichnet, dass** die Fasern Hochleistungsfasern sind.

13. Nutzfahrzeug nach einem der voranstehenden Ansprüche, **dadurch gekennzeichnet, dass** die Höhe der lattenartigen Bordwand (18,19) 150 - 300 mm beträgt.

14. Nutzfahrzeug nach einem der voranstehenden Ansprüche, **dadurch gekennzeichnet, dass** die lattenartige Bordwand (18,19) Öffnungen (23) aufweist, in die ein Befestigungselement (R) einsteckbar ist, das zum Halten eines auf der Ladefläche (2) abgestellten Transportguts vorgesehen ist.

15. Nutzfahrzeug nach einem der voranstehenden Ansprüche, **dadurch gekennzeichnet, dass** bei geschlossenem Planenaufbau (3) der von zwei benachbarten Rungen (4,7,5,8) seitlich begrenzte und oberhalb der diesen benachbarten Rungen zugeordneten Bordwand (18,19) bis zum zugeordneten Dachholm (9,10) vorhandene Raum frei von Bauteilen des Planenaufbaus (3) ist.
